# EUROPEAN PATENT SPECIFICATION

(11) **EP 4 528 901 B1**
(45) Date of publication and mention of the grant of the patent: **02.12.2026**
(21) Application number: 23931064.2
(22) Date of filing: 15.12.2023
(51) Int. Cl.: H01M 10/052, H01M 10/0525, H01M 50/403, H01M 50/426, H01M 50/44, H01M 50/446, H01M 50/454, H01M 50/489, H01M 50/414, H01M 50/429, H01M 50/451, H01M 50/457

(54) **METHOD FOR MANUFACTURING SEPARATOR FOR LITHIUM SECONDARY BATTERY, SEPARATOR FOR LITHIUM SECONDARY BATTERY MANUFACTURED THEREFROM, AND LITHIUM SECONDARY BATTERY INCLUDING THE SAME**
VERFAHREN ZUR HERSTELLUNG EINES SEPARATORS FÜR EINE LITHIUMSEKUNDÄRBATTERIE, MIT DIESEM VERFAHREN HERGESTELLTER SEPARATOR FÜR EINE LITHIUMSEKUNDÄRBATTERIE UND LITHIUMSEKUNDÄRBATTERIE DAMIT
PROCÉDÉ DE PRÉPARATION D'UN SÉPARATEUR POUR BATTERIE SECONDAIRE AU LITHIUM, SÉPARATEUR POUR BATTERIE SECONDAIRE AU LITHIUM PRÉPARÉ AU MOYEN DE CE PROCÉDÉ, ET BATTERIE SECONDAIRE AU LITHIUM LE COMPORTANT

(30) Priority: 24.03.2023 KR 20230038832; 14.12.2023 KR 20230182432
(43) Date of publication of application: 26.03.2025
(73) Proprietor: LG Energy Solution, Ltd., Seoul 07335 (KR)
(72) Inventor: KIM, Kyung-Tae, Daejeon 34122 (KR); BAE, Dong-Hun, Daejeon 34122 (KR); LEE, Yong-Hyeok, Daejeon 34122 (KR); JEONG, So-Mi, Daejeon 34122 (KR)
(74) Representative: Hoffmann Eitle
(86) International application number: PCT/KR2023/020816
(87) International publication number: WO 2024/204956

(56) References cited:
- CN-A- 115 663 278
- KR-A- 20140 078 966
- KR-A- 20230 033 040
- KR-B1- 102 344 099
- LIU RONG, YUAN BOTAO, ZHONG SHIJIE, LIU JIPENG, DONG LIWEI, JI YUANPENG, DONG YUNFA, YANG CHUNHUI, HE WEIDONG: "Poly(vinylidene fluoride) separators for next‐generation lithium based batteries", NANO SELECT, WILEY, vol. 2, no. 12, 1 December 2021 (2021-12-01), pages 2308 - 2345, XP093216951, ISSN: 2688-4011, DOI: 10.1002/nano.202100118
- CHEN YUE, QIU LINLIN, MA XIANGYU, CHU ZHUDAN, ZHUANG ZHISHAN, DONG LIKA, DU PINGFAN, XIONG JIE: "Electrospun PMIA and PVDF-HFP composite nanofibrous membranes with two different structures for improved lithium-ion battery separators", SOLID STATE IONICS, vol. 347, 1 April 2020 (2020-04-01), NL , pages 1 - 8, XP093216956, ISSN: 0167-2738, DOI: 10.1016/j.ssi.2020.115253
- WAQAS MUHAMMAD, ALI SHAMSHAD, FENG CHAO, CHEN DONGJIANG, HAN JIECAI, HE WEIDONG: "Recent Development in Separators for High‐Temperature Lithium‐Ion Batteries", SMALL, vol. 15, no. 33, 1 August 2019 (2019-08-01), Hoboken, USA, pages 1 - 44, XP093216960, ISSN: 1613-6810, DOI: 10.1002/smll.201901689

## Description

### TECHNICAL FIELD

The present disclosure relates to a method for manufacturing a separator for a lithium secondary battery, a separator for a lithium secondary battery manufactured therefrom, and a lithium secondary battery including the same.

This application is based on and claims priorities from Korean Patent Application No. 10-2023-0038832, filed on March 24, 2023 and Korean Patent Application No. 10-2023-0182432, filed on December 14, 2023.

### BACKGROUND

In recent years, there has been a growing interest in energy storage technologies. As application areas of electrochemical devices expand to include mobile phones, camcorders, laptop PCs, and even electric vehicles, efforts to research and develop electrochemical devices are becoming more concrete. Electrochemical devices are one of the most prominent areas in this regard, and the development of secondary batteries, such as lithium secondary batteries that are capable of being charged and discharged, has become a focus of interest.

For the separator that makes up such a battery, its basic requirements are to separate the positive electrode and the negative electrode and electrically insulate them, while increasing the permeability of ions, such as lithium ions, based on high porosity, thereby increasing ionic conductivity. The commonly used base for the separator is a porous polyolefin base made of polyolefin-based materials such as polyethylene (PE) and polypropylene (PP), which are advantageous in forming pores and have excellent chemical resistance, mechanical properties, and thermal properties. The technology regarding the separator includes, for example, those described in Patent Literature 1, 2 and 3.

In Patent Literature 1, a composite solid-state electrolyte membrane and preparation method thereof are described. The composite solid-state electrolyte membrane comprises a PVDF-HFP@PI nanofiber membrane having a core-shell structure and a lithium ion conductor Li₃Zr₂Si₂PO₁₂ filled in pores thereof, a polymer capable of complexing and conducting lithium ions, and a lithium salt composite electrolyte.
In Patent Literature 2, a composited nonwoven separator for a secondary battery and a production method thereof are described. The production method includes a step of forming nanofiber nonwoven by using a polymer solution, wherein the polymer comprises (1) a cellulose derivative (e.g. cellulose, cellulose acetate, etc.), chitin, chitosan, alginate, polymer containing hydroxyl group (~ OH group) in molecular structure such as polyvinyl alcohol having a degree of polymerization of 1,000 or less, (2) poly sulfone, poly ether imide, or (3) polyvinyl alcohol, polyimide, poly vinylidene fluoride, poly acrylo nitrile, polyethylene oxide, polyethylene, poly propylene, polyethylene terephthalate with a degree of polymerization, or a mixture thereof. In Patent Literature 3, a separator for a lithium ion battery is described. The separator comprises a matrix including a plurality of cross-linked fibers and pores positioned between the fibers, wherein the fibers include a core containing polyvinyl alcohol and a shell containing polyacrylonitrile.

### Citation List - Patent Literature

PTL 1: CN 115 663 278 A
PTL 2: KR 2014 0078966 A
PTL 3: KR 2023 0033040 A

### SUMMARY

### Technical Problem

According to an aspect, the present disclosure provides a method for manufacturing a non-woven separator for a lithium secondary battery that has good heat shrinkage properties and exhibits low resistance and improved cycle performance when applied to lithium secondary batteries.

According to another aspect, the present disclosure provides a non-woven separator for a lithium secondary battery that exhibits the above-described characteristics.

According to yet another aspect, the present disclosure provides a composite separator for a lithium secondary battery including the non-woven separator having the above-described characteristics.

According to still another aspect, the present disclosure provides an electrode assembly for a lithium secondary battery, and a lithium secondary battery, which include the non-woven separator having the above-described characteristics.

### Technical Solution

One aspect of the present disclosure provides a method for manufacturing a non-woven separator for a lithium secondary battery according to the following embodiments.

A first embodiment relates to a method for manufacturing a non-woven separator for a lithium secondary battery, the method including: (S1) preparing a first solution of β-chitin dissolved in a first solvent and a second solution of vinylidene fluoride-trifluoroethylene copolymer (PVDF-TrFE) dissolved in a second solvent; (S2) coaxial electrospinning with the first solution as a core solution and the second solution as a shell solution to produce a non-woven fabric formed of a fiber with a core-shell structure having a core portion of the β-chitin and a shell portion of the vinylidene fluoride-trifluoroethylene copolymer; and (S3) performing heat treatment on the non-woven fabric at a temperature lower than a thermal decomposition point of the β-chitin and higher than a melting point of the vinylidene fluoride-trifluoroethylene copolymer to melt and recrystallize the vinylidene fluoride-trifluoroethylene copolymer.

A second embodiment relates to the method for manufacturing a non-woven separator for a lithium secondary battery according to the first embodiment, in which a weight ratio of the core portion of the β-chitin and the shell portion of the vinylidene fluoride-trifluoroethylene copolymer is approximately 50:50 to 99:1.

A third embodiment relates to the method for manufacturing a non-woven separator for a lithium secondary battery according to the first or second embodiment, in which the first solvent is 1,1,1,3,3,3-hexafluoro-2-propanol (HFIP), and the second solvent is methylethylketone (MEK).

A fourth embodiment relates to the method for manufacturing a non-woven separator for a lithium secondary battery according to the first embodiment, in which the temperature of the heat treatment of the non-woven fabric is approximately 150 °C to 250 °C.

A fifth embodiment relates to the method for manufacturing a non-woven separator for a lithium secondary battery according to the first embodiment, in which the vinylidene fluoride-trifluoroethylene copolymer has a crystal grown along a crystal axis, and the crystal grown along the crystal axis is aligned in a direction not parallel to a longitudinal direction of the fiber.

Another aspect of the present disclosure provides a non-woven separator for a lithium secondary battery according to the following embodiments.

A sixth embodiment relates to a non-woven separator for a lithium secondary battery, including: a fiber with a core-shell structure having a core portion of the β-chitin and a shell portion of the vinylidene fluoride-trifluoroethylene copolymer. The vinylidene fluoride-trifluoroethylene copolymer has a crystal grown along a crystal axis, and the crystal grown along the crystal axis is aligned in a direction not parallel to a longitudinal direction of the fiber.

A seventh embodiment relates to the non-woven separator for a lithium secondary battery according to the sixth embodiment, in which the crystal grown along the crystal axis is aligned in a direction substantially perpendicular to the longitudinal direction of the fiber.

An eighth embodiment relates to the non-woven separator for a lithium secondary battery according to the sixth or seventh embodiment, in which a weight ratio of the core portion and the shell portion is approximately 50:50 to 99:1.

A ninth embodiment relates to the non-woven separator for a lithium secondary battery according to any one of the sixth to eighth embodiments, in which the fiber with the core-shell structure has an average diameter of approximately 200 nm to 2,000 nm.

A tenth embodiment relates to the separator for a lithium secondary battery according to any one of the sixth to ninth embodiments, in which the non-woven separator has a thickness of approximately 2 µm to 30 µm.

An eleventh embodiment relates to the separator for a lithium secondary battery according to any one of the sixth to tenth embodiments, in which the non-woven separator has a basis weight of approximately 2 g/m² to 10 g/m².

A twelfth embodiment relates to the separator for a lithium secondary battery according to any one of the sixth to eleventh embodiments, in which the non-woven separator has a permeability of approximately 50 s/100 cc or less.

A thirteenth embodiment relates to the separator for a lithium secondary battery according to any one of the sixth to twelfth embodiments, further including a mixture of inorganic particles and a polymer coated on at least one surface of the non-woven separator.

Yet another aspect of the present disclosure provides a composite separator for a lithium secondary battery according to the following embodiments.

A fourteenth embodiment relates to a composite separator for a lithium secondary battery including: the non-woven separator of any one of the sixth to thirteenth embodiments; and a porous polymer film laminated on at least one surface of the non-woven separator.

Still another aspect of the present disclosure provides an electrode assembly for a lithium secondary battery according to the following embodiments.

A fifteenth embodiment relates to an electrode assembly for a lithium secondary battery including: a positive electrode; a negative electrode; and separator disposed between the positive electrode and the negative electrode. The separator is the non-woven separator of any one of the sixth to thirteenth embodiments.

A sixteenth embodiment relates to an electrode assembly for a lithium secondary battery including: a positive electrode; a negative electrode; and separator disposed between the positive electrode and the negative electrode. The separator is the composite separator of the fourteenth embodiment.

Still yet another aspect of the present disclosure provides a lithium secondary battery according to the following embodiment.

A seventeenth embodiment relates to a lithium secondary battery including: the electrode assembly of the fifteenth embodiment.

An eighteenth embodiment relates to a lithium secondary battery including: the electrode assembly of the sixteenth embodiment.

### Advantageous Effects

According to the present disclosure, a non-woven separator for a lithium secondary battery includes a fiber with a core-shell structure having a core portion of the β-chitin and a shell portion of the vinylidene fluoride-trifluoroethylene copolymer. The vinylidene fluoride-trifluoroethylene copolymer has a crystal grown along a crystal axis. Further, the crystal grown along the crystal axis is aligned in a direction not parallel to a longitudinal direction of the fiber.

The β-chitin, which constitutes the core portion of the fiber, has excellent heat resistance, and maintains the properties of the fiber even at high temperatures, which results in good heat shrinkage characteristics. Further, the β-chitin is a ferroelectric polymer that has ferroelectricity due to functional groups within the molecule, and thus exhibits high affinity for lithium ions. Therefore, the fiber having a β-chitin core induce uniform migration of lithium ions and reduce resistance.

The vinylidene fluoride-trifluoroethylene copolymer, which constitutes the shell portion of the fiber, is also a ferroelectric polymer with β-crystallinity. The shell portion of the vinylidene fluoride-trifluoroethylene copolymer formed on the surface of the core portion of the β-chitin by the coaxial electrospinning method is melted and recrystallized by heat treatment to have a crystal grown along the crystal axis, and the crystal grown along the crystal axis is aligned in a direction not parallel to the longitudinal direction of the fiber. The crystal grown along the crystal axis of the vinylidene fluoride-trifluoroethylene copolymer maximizes ferroelectricity, especially when aligned in a direction substantially perpendicular to the longitudinal direction of the fiber. Accordingly, the affinity for lithium ions of the non-woven separator formed from the fiber of the core-shell structure of the present disclosure is further increased, resulting in low resistance and improved cycle performance when applied to lithium secondary batteries.

### BRIEF DESCRIPTION OF THE DRAWINGS

FIG. 1 is a surface SEM photograph of a non-woven separator according to an Example of the present disclosure.
FIG. 2 is a surface SEM photograph of a non-woven separator according to a Comparative Example of the present disclosure.
FIG. 3 is a result of a GIWAXS analysis of a non-woven separator according to an Example of the present disclosure.

Corresponding reference characters indicate corresponding components throughout the several views of the drawings. The drawing figures presented are illustrated for simplicity and clarity and have not necessarily been drawn to scale. For example, the dimensions of some of the elements in the figures may be exaggerated relative to other elements to help to improve understanding of various embodiments. Also, common but well-understood elements that are useful or necessary in a commercially feasible embodiment are often not depicted in order to facilitate a less obstructed view of these various embodiments.

### DETAILED DESCRIPTION

In the following detailed description, reference is made to the accompanying drawings which form a part hereof.

Throughout the specification, when a part is mentioned to "include" or "is provided with" a certain component, it means that this does not exclude other components, but includes or is further provided with other components, unless specifically stated to the contrary.

As used herein, the characteristic of having pores means that an object includes a plurality of pores and that gaseous and/or liquid fluid is able to pass from one side to the other side of the object due to a structure in which the pores are connected to each other.

In the present specification, the separator has porous characteristics including a large number of pores, and serves as a porous ion-conducting barrier that allows ions to pass while blocking electrical contact between the negative electrode and positive electrode in an electrochemical device.

As used herein, "non-woven fabric" means a fabric formed by interwinding fibers with each other, rather than a fabric woven from warp and weft yarns using a weaving machine or a knitted fabric using a knitting machine.

As used herein, the term "substantially vertical direction" should be interpreted to include a direction in which the angle is exactly vertical, 90°, as well as a direction in which the angle is 90° ±15°, which is substantially vertical.

As used herein, the term "non-parallel direction" should be interpreted to include a direction in which the angle is 20° to 90°.

As used herein, the words "about," "approximately," and "substantially" are used to mean a range or approximation of a numerical value or degree, taking into account inherent manufacturing and material tolerances, and are used to prevent infringers from taking unfair advantage of the disclosure where precise or absolute numbers are provided to aid in the understanding of the disclosure.

The separator is one of the important elements of a lithium secondary battery along with the positive electrode, negative electrode, and electrolyte. The separator plays a role in preventing physical contact between the negative electrode and the positive electrode, and is closely related to not only the efficiency but also the safety of the lithium secondary battery.

Polyolefin-based separators are most widely used in the lithium secondary battery due to the good chemical stability and mechanical strength. However, due to the material properties of the porous polyolefin film and the manufacturing process, especially including stretching, the separator may thermally shrink at high temperatures, causing internal short circuits and melting of the polymeric separator base during thermal runaway. Thus, the risk of ignition increases.

In this respect, there has been proposed a method of using a non-woven fabric made of a heat-resistant fiber such as polyethylene terephthalate as a substrate for a separator. The heat-resistant non-woven fabric may be applied as a separator by itself or in such a manner that a mixture of inorganic particles and polymers is coated on the non-woven fabric. Alternatively, the separator may be used in the form of a composite separator made by laminating and bonding such a separator with a porous polymer film.

In the present disclosure, nanofibers with a core-shell structure of β-chitin and copolymer (PVDF-TrFE) were fabricated using coaxial electrospinning, and a non-woven separator with maximized crystallinity was prepared by aligning the PVDF-TrFE polarization axis (b-axis) through appropriate heat treatment, and applied to a lithium secondary battery. Then, it was confirmed that the resistance and cell cycle performance of the non-woven separator were improved as will be described below.

An embodiment of the present disclosure relates to a method for manufacturing a non-woven separator for a lithium secondary battery, the method including: (S1) preparing a first solution of β-chitin dissolved in a first solvent and a second solution of vinylidene fluoride-trifluoroethylene copolymer (PVDF-TrFE) dissolved in a second solvent; (S2) coaxial electrospinning with the first solution as a core solution and the second solution as a shell solution to produce a non-woven fabric formed of a fiber with a core-shell structure having a core portion of the β-chitin and a shell portion of the vinylidene fluoride-trifluoroethylene copolymer; and (S3) performing heat treatment on the non-woven fabric at a temperature lower than a thermal decomposition point of the β-chitin and higher than a melting point of the vinylidene fluoride-trifluoroethylene copolymer to melt and recrystallize the vinylidene fluoride-trifluoroethylene copolymer.

First, a first solution of β-chitin dissolved in a first solvent and a second solution of vinylidene fluoride-trifluoroethylene copolymer (PVDF-TrFE) dissolved in a second solvent are prepared, respectively (S1).

The first solvent for dissolving β-chitin is not limited, but may be any solvent capable of dissolving β-chitin to perform electrospinning, for example, 1,1,1,3,3,3-hexafluoro-2- propanol(HFIP).

The second solvent for dissolving the vinylidene fluoride-trifluoroethylene copolymer (PVDF-TrFE) is not limited, but may be any solvent capable of dissolving the vinylidene fluoride-trifluoroethylene copolymer (PVDF-TrFE) to perform electrospinning such as, for example, methyl ethyl ketone (MEK).

Subsequently, the first solution as a core solution and the second solution as a shell solution are subjected to coaxial electrospinning to produce a non-woven fabric formed of a fiber with a core-shell structure having a core portion of the β-chitin and a shell portion of the vinylidene fluoride-trifluoroethylene copolymer (S2).

As is well known, by utilizing a coaxial electrospinning machine, a first solution of β-chitin dissolved in a first solvent is supplied as a core solution, and a second solution of vinylidene fluoride-trifluoroethylene copolymer (PVDF-TrFE) dissolved in a second solvent is supplied as a shell solution, and electrospinning is performed through one nozzle. Then, a nonwoven fabric formed of fibers with a core-shell structure having a core portion of β-chitin and a shell portion of a vinylidene fluoride-trifluoroethylene copolymer may be prepared.

According to one embodiment, the production of non-woven fabric by electrospinning is performed by using a first solution of β-chitin and a second solution of vinylidene fluoride-trifluoroethylene copolymer (PVDF-TrFE) as a core solution and a shell solution, respectively, introducing the first and second solutions into a coaxial electrospinning nozzle adjusted to a temperature of room temperature to about 80 °C, and performing electrospinning with an electric field formed between the electrospinning nozzle and the substrate. The electric field may be formed by applying a voltage of, for example, 1 kV to 30 kV. Then, the first solution and the second solution are spun from the coaxial electrospinning nozzle to which high voltage is applied and coated in the form of fibers on the substrate to form a non-woven fabric. The formed non-woven fabric may be peeled off from the substrate and used as a separator, or when another separator or electrode is used as the substrate, the non-woven fabric may be used in a form of being coated on the substrate.

Most of the solvent may be dried immediately after the electrospinning, but the solvent may also be completely removed using a separate drying device.

At this time, the substrate that is a target of coaxial electrospinning opposite the spinning nozzle may be positioned in a direction parallel to the floor or perpendicular to the floor.

Subsequently, heat treatment is performed on the non-woven fabric at a temperature lower than a thermal decomposition point of the β-chitin and higher than a melting point of the vinylidene fluoride-trifluoroethylene copolymer to melt and recrystallize the vinylidene fluoride-trifluoroethylene copolymer (S3). Since the melting point of vinylidene fluoride-trifluoroethylene copolymer is about 146 °C, the heat treatment temperature may be, for example, about 150 °C to 250 °C, but is not limited thereto.

The non-woven separator thus prepared is formed from a fiber with a core-shell structure having a core portion of the β-chitin and a shell portion of the vinylidene fluoride-trifluoroethylene copolymer, and the vinylidene fluoride-trifluoroethylene copolymer has a crystal grown along a crystal axis. Further, the crystal grown along the crystal axis is aligned in a direction not parallel to a longitudinal direction of the fiber.

The β-chitin, which constitutes the core part of the fiber, has excellent heat resistance, and maintains the properties of the fiber even at high temperatures, which results in good heat shrinkage characteristics. Further, the β-chitin is a ferroelectric polymer that has ferroelectricity due to functional groups within the molecule, and thus exhibits high affinity for lithium ions. Therefore, the fiber having a β-chitin core induce uniform migration of lithium ions and reduce resistance.

The vinylidene fluoride-trifluoroethylene copolymer, which constitutes the shell portion of the fiber, is also a ferroelectric polymer with β-crystallinity. The shell portion of the vinylidene fluoride-trifluoroethylene copolymer formed on the surface of the core portion of β-chitin by coaxial electrospinning is melted and recrystallized by heat treatment, and has a crystal grown along the crystal axis (epitaxial growth). The epitaxial growth along the crystal axis of the vinylidene fluoride-trifluoroethylene copolymer is also observed on the surface of polytetrafluoroethylene or graphene, but the b-axis (polarization axis) is aligned parallel to the crystal of polytetrafluoroethylene or graphene, which limits to increasing the ferroelectricity of the vinylidene fluoride-trifluoroethylene copolymer. The crystal grown along the crystal axis of the vinylidene fluoride-trifluoroethylene copolymer maximizes ferroelectricity, especially when aligned in a direction substantially perpendicular to the longitudinal direction of the fiber. Accordingly, the affinity for lithium ions of the non-woven separator formed from the fiber of the core-shell structure of the present disclosure is further increased, resulting in low resistance and improved cycle performance when applied to lithium secondary batteries. In addition, problems such as lithium dendrite precipitation may be suppressed, and in some cases, eliminated.

At this time, the weight ratio of the core portion of β-chitin and the shell portion of the vinylidene fluoride-trifluoroethylene copolymer, which constitute the fiber of the non-woven fabric, may be about 50:50 to 99:1, and, for example, about 50:50 to 80:20, but is not limited thereto.

The average diameter of the fiber of the core-shell structure may be adjusted according to the concentrations of the core solution and the shell solution and the diameter of the spinning nozzle. For example, the average diameter of the fiber of the core-shell structure may be 200 nm to 2,000 nm, or 300 nm to 1,000 nm. The non-woven fabric formed from the fiber of the core-shell structure is intertwined with each other and has a three-dimensional (3D) shape, and the pore size of the non-woven fabric may be adjusted according to the average diameter of the fiber of the core-shell structure and the loading amount of the fiber. The basis weight of the non-woven fabric may be from 2 g/m² to 10 g/m², but is not limited thereto. The permeability of the non-woven fabric may be about 50 s/100 cc or less, but is not limited thereto.

The thickness of the non-woven fabric may be about 2 µm to 30 µm, but is not limited thereto, and the non-woven fabric formed through electrospinning is easy to thin.

The prepared non-woven separator may further include a mixture of inorganic particles and a polymer coated on at least one surface of the non-woven fabric.

The inorganic particles are not particularly limited as long as they are electrochemically stable. For example, the inorganic particles are not particularly limited as long as oxidation and/or reduction reactions do not occur in the operating voltage range of the applied lithium secondary battery (*e.g*., 0 V to 5 V based on Li/Li⁺). In particular, the use of inorganic particles having a high permittivity may contribute to an increase in the dissociation of electrolyte salts, such as lithium salts, in the liquid electrolyte, thereby improving the ionic conductivity of the electrolyte.

For the reasons described above, the inorganic particles may include high-permittivity inorganic particles having a dielectric constant of 5 or more, or 10 or more. Non-limiting examples of the inorganic particles having a dielectric constant of 5 or more include any one inorganic particle selected from the group consisting of BaTiO₃, Pb(Zrₓ,Ti₁₋ₓ)O₃ (PZT, where 0<x<1), Pb₁₋ₓLaₓZr_{1-y}Ti_{y}O₃ (PLZT, where 0<x<1, 0<y<1), (1-x)Pb(Mg_{1/3}Nb_{2/3})O₃₋ₓPbTiO₃ (PMN-PT, where 0<x<1), hafnia (HfO₂), SrTiO₃, SnO₂, CeO₂, MgO, NiO, CaO, ZnO, ZrO₂, Y₂O₃, Al₂O₃, boehmite, AlOOH, SiC, and TiO₂, or a mixture of two or more thereof.

Further, inorganic particles having a lithium ion transfer capacity, that is, inorganic particles that contain the element lithium but do not store lithium and have an ability to transfer lithium ions, may be used as the inorganic particles. Non-limiting examples of inorganic particles having a lithium ion transfer capability include lithium phosphate (Li₃PO₄), lithium titanate (LiₓTi_{y}(PO₄)₃, 0<x<2, 0<y<3), lithium aluminum titanate (LiₓAl_{y}Ti_{z}(PO₄)₃, 0<x<2, 0<y<1, 0<z<3), (LiAlTiP)ₓO_{y} series glasses (0<x<4, 0<y<13) such as 14Li₂O-9Al₂O₃-38TiO₂-39P₂O₅, lithium lanthanum titanate (LiₓLa_{y}TiO₃, 0<x<2, 0<y<3), lithium germanium thiophosphate (LiₓGe_{y}P_{z}S_{w}, 0<x<4, 0<y<1, 0<z<1, w<5) such as Li_{3.25}Ge_{0.25}P_{0.75}S₄, lithium nitride (LiₓN_{y}, 0<x<4, 0<y<2) such as Li₃N, SiS₂ series glasses (LiₓSi_{y}S_{z}, 0<x<3, 0<y<2, 0<z<4) such as Li₃PO₄-Li₂S-SiS₂, and P₂S₅ series glasses (LiₓP_{y}S_{z}, 0<x<3, 0<y<3, 0<z<7) such as LiI-Li₂S-P₂S₅, or a mixture of two or more thereof.

The inorganic particles may be mixed with the polymer and coated on at least one surface of the non-woven fabric. Non-limiting examples of the polymer include polyvinylidene fluoride, polyvinylidene fluoride-co-hexafluoro propylene, polyvinylidene fluoride-co-trichloro ethylene, polyvinylidene fluoride-co-chlorotrifluoro ethylene, and polymethyl methacrylate, polyacrylonitrile, polyvinylpyrrolidone, polyvinylacetate, ethylene vinyl acetate copolymer (polyethylene-co-vinyl acetate), polyethylene oxide, cellulose acetate, cellulose acetate butyrate, cellulose acetate propionate, cyanoethylpullulan, cyanoethylpolyvinylalcohol, cyanoethylcellulose, cyanoethylsucrose, pullulan, carboxyl methyl cellulose, acrylonitrile-styrene-butadiene copolymer, polyimide, or a mixture of two or more thereof. Both ionically conductive and ionically non-conductive polymers may be used.

The coating of the mixture of the inorganic particles and the polymer may be accomplished by further dispersing the inorganic particles in a slurry in which the polymer is dissolved or dispersed in a solvent, and then coating and drying it on at least one surface of the non-woven fabric. By this coating, the mixture of the inorganic particles and the polymer may be located only on the surface of the non-woven fabric, located on both the surface and internal pores of the non-woven fabric, or mainly located inside the porous polymer non-woven fabric, according to the pore size of the non-woven fabric.

The inorganic particles may be located in substantially contact with each other, except when the fiber is interposed therebetween. In this case, when the mixed polymer is formed as a coating layer on a portion or all of the surface of the inorganic particles, the polymer may connect and fix the inorganic particles so that the inorganic particles remain bound to each other.

The non-woven separator of the above-described type may be laminated on at least one surface of the porous polymer film and used in the form of a composite separator.

The porous polymer film may be simply laminated with a non-woven separator or attached to the non-woven separator through a process such as lamination.

The porous polymer film may be, for example, a polyolefin porous polymer film. Any polyolefin porous polymer film that is commonly used as a separator may be used. Examples thereof include polyethylene, such as high-density polyethylene, linear low-density polyethylene, low-density polyethylene, and ultra-high molecular weight polyethylene, and polyolefin-based polymers, such as polypropylene, polybutylene, and polypentene, which may be used alone or in a mixture of two or more thereof to form a polymer. When such a polyolefin porous polymer film is laminated with the non-woven separator and used as a composite separator, the polyolefin porous polymer film exhibits a shutdown function at a temperature of, for example, 80 °C to 150 °C. In this respect, the polyolefin porous polymer film may be made of polyethylene.

The non-woven separator or composite non-woven separator described above may be interposed between the positive electrode and the negative electrode and used as an electrode assembly for a lithium secondary battery.

Hereinafter, the positive electrode and negative electrode constituting the electrode assembly will be described by way of example.

The positive electrode includes a positive electrode collector and a positive electrode active material layer formed on the positive electrode collector.

In the positive electrode, the positive electrode collector is not particularly limited as long as it is conductive without causing chemical changes in the battery, and examples thereof include stainless steel, aluminum, nickel, titanium, calcined carbon, or aluminum or stainless steel subjected to surface treatment with carbon, nickel, titanium, or silver. Further, the positive electrode collector may have a thickness of typically about 3 µm to 500 µm, and fine irregularities may be formed on the surface of the positive electrode collector to increase the adhesion of the positive electrode active material. For example, the positive electrode collector may be used in various forms, such as a film, a sheet, a foil, a net, a porous body, a foam, a non-woven body, and the like.

The positive electrode active material layer may include well-known positive electrode active material, conductive material, and binder.

The positive electrode active material includes layered compounds such as lithium cobalt oxide (LiCoO₂) and lithium nickel oxide (LiNiO₂) or compounds substituted with one or more transition metal elements; lithium manganese oxides such as Li₁₊ₓMn₂₋ₓO₄ (where x is 0 to 0.33), LiMnO₃, LiMn₂O₃, and LiMnO₂; lithium copper oxide (Li₂CuO₂); vanadium oxides such as LiV₃O₈, V₂O₅, and Cu₂V₂O₇; Ni site type lithium nickel oxides represented by the formula LiNi₁₋ₓMₓO₂ (where M is Co, Mn, Al, Cu, Fe, Mg, B, or Ga and x is 0.01 to 0.3); lithium manganese complex oxides represented by the formula LiMn₂₋ₓMₓO₂ (where M is Co, Ni, Fe, Cr, Zn, or Ta, and x is 0.01 to 0.1) or Li₂Mn₃MO₈ (where M is Fe, Co, Ni, Cu, or Zn); LiMn₂O₄ in which some of Li in the formula is replaced with an alkaline earth metal ion; disulfide compounds; Fe₂(MoO₄)₃, but is not limited thereto.

The conductive material is used to impart conductivity to the electrode, and may be used without particular restrictions as long as it has electronic conductivity without causing chemical changes in the battery to be constructed. Specific examples thereof include graphite such as natural or artificial graphite; carbon-based materials such as carbon black, acetylene black, Ketjen black, channel black, furnace black, lamp black, thermal black, and carbon fiber; metal powders or metal fibers such as copper, nickel, aluminum, and silver; conductive whiskers such as zinc oxide and potassium titanate; conductive metal oxides such as titanium oxide; and conductive polymers such as polyphenylene derivatives, These may be used alone or in a mixture of two or more thereof. The conductive material may typically be included in an amount of approximately 1% to 30% by weight based on the total weight of the positive electrode active material layer.

The binder serves to enhance the adhesion between the positive electrode active material particles and the adhesion between the positive electrode active material and the positive electrode collector. Specific examples thereof include polyvinylidene fluoride (PVDF), vinylidene fluoride-hexafluoropropylene copolymer (PVDF-co-HFP), polyvinyl alcohol, polyacrylonitrile, carboxymethyl cellulose (CMC), starch, hydroxypropyl cellulose, and regenerated cellulose, polyvinylpyrrolidone, tetrafluoroethylene, polyethylene, polypropylene, ethylene-propylene-diene polymer (EPDM), sulfonated-EPDM, styrene butadiene rubber (SBR), fluorinated rubber, or various copolymers thereof. These may be used alone or in a mixture of two or more thereof. The binder may be included in an amount of approximately 1% to 30% by weight based on the total weight of the positive electrode active material layer.

The positive electrode may be manufactured according to a conventional positive electrode manufacturing method. For example, the positive electrode may be manufactured by applying a composition for forming a positive electrode active material layer including an positive electrode active material and optionally a binder and a conductive material to the positive electrode collector, followed by drying and rolling. At this time, the type and content of the positive electrode active material, binder, and conductive material are as described above.

The solvent may be a solvent commonly used in the art, such as dimethyl sulfoxide (DMSO), isopropyl alcohol, N-methylpyrrolidone (NMP), acetone, or water, which may be used alone or in a mixture of two or more. The amount of solvent used is sufficient to dissolve or disperse the positive electrode active material, the conductive material, and the binder in consideration of the application thickness of the slurry and the manufacturing yield, and to provide a viscosity capable of exhibiting good thickness uniformity upon subsequent application for positive electrode production.

Alternatively, the positive electrode may be manufactured by casting a composition for forming the positive electrode active material layer on a separate support and then laminating the film obtained by peeling from the support on the positive electrode collector.

The negative electrode includes a negative electrode collector and a negative electrode active material layer located on the negative electrode collector.

The negative electrode collector is not particularly limited as long as it has high conductivity without causing chemical changes in the battery, and examples thereof include copper, stainless steel, aluminum, nickel, titanium, calcined carbon, copper or stainless steel subjected to surface treatment with carbon, nickel, titanium, or silver, and aluminum-cadmium alloys. Further, the negative electrode collector may have a thickness of typically about 3 µm to 500 µm, and like the positive electrode collector, fine irregularities may be formed on the surface of the collector to strengthen the bonding force of the negative electrode active material. For example, the negative electrode collector may be used in various forms, such as a film, a sheet, a foil, a net, a porous body, a foam, a non-woven body, and the like.

The negative electrode active material layer optionally includes a binder and a conductive material along with the negative electrode active material. The negative electrode active material layer may be prepared, for example, by applying a negative electrode forming composition containing a negative electrode active material and optionally a binder and a conductive material on the negative electrode collector and drying the negative electrode forming composition, or by casting the negative electrode forming composition onto a separate support and then laminating the film obtained by peeling from the support onto the negative electrode collector.

The negative electrode active material may be any compound capable of reversible intercalation and deintercalation of lithium. Examples thereof include carbon-based materials such as artificial graphite, natural graphite, graphitized carbon fiber, and amorphous carbon; metallic compounds capable of being alloyed with lithium, such as Si, Al, Sn, Pb, Zn, Bi, In, Mg, Ga, Cd, Si alloys, Sn alloys, or Al alloys; metal oxides capable of doping and de-doping lithium, such as SiO_{β} (0<β<2), SnO₂, vanadium oxide, lithium vanadium oxide; or composites containing the above metallic compounds and carbon-based materials, such as Si-C composites or Sn-C composites, and these may be used alone or in a mixture of two or more thereof. Further, a metallic lithium thin film may be used as the negative electrode active material. In addition, both low-crystalline carbon and high-crystalline carbon may be used as carbon materials. Representative examples of the low-crystalline carbon include soft carbon and hard carbon, and representative examples of the high-crystalline carbon include amorphous, plate, in-plane, spherical, or fibrous natural or artificial graphite, Kish graphite, pyrolytic carbon, mesophase pitch based carbon fiber, meso-carbon microbeads, mesophase pitches, and high temperature calcined carbon such as petroleum or coal tar pitch derived cokes.

The binder and the conductive material may be the same as those previously described for the positive electrode.

Meanwhile, the lithium secondary battery according to one aspect of the present disclosure includes the electrode structure described above.

The lithium secondary battery includes the electrode structure and electrolyte described above. Examples of the electrolyte used in the present disclosure include an organic liquid electrolyte, an inorganic liquid electrolyte, a solid polymer electrolyte, a gel-type polymer electrolyte, a solid inorganic electrolyte, and a molten inorganic electrolyte that may be used in the production of a lithium secondary battery, but is not limited thereto.

For example, the electrolyte may contain an organic solvent and a lithium salt.

The organic solvent may be used without particular restrictions as long as it can serve as a medium for ions involved in the electrochemical reaction of the battery to migrate. Specific examples of the organic solvent include ester-based solvents such as methyl acetate, ethyl acetate, γ-butyrolactone,and ε-caprolactone; ether-based solvents such as dibutyl ether and tetrahydrofuran; ketone-based solvents such as cyclohexanone; aromatic hydrocarbon-based solvents such as benzene and fluorobenzene; carbonate-based solvents such as dimethylcarbonate (DMC), diethylcarbonate (DEC), methylethylcarbonate (MEC), ethylmethylcarbonate (EMC), ethylene carbonate (EC), and propylene carbonate (PC); alcohol-based solvents such as ethyl alcohol and isopropyl alcohol; nitriles such as R-CN (where R is a straight, branched, or cyclic hydrocarbon group having 2 to 20 carbon atoms, which may include a double bonded aromatic ring or ether bond); amides such as dimethylformamide; dioxolanes such as 1,3-dioxolane; and sulfolanes. Among these, according to an embodiment, the carbonate-based solvents may be used, and a mixture of a cyclic carbonate (e.g., ethylene carbonate or propylene carbonate) having a high ionic conductivity and high dielectric constant that may increase the charge and discharge performance of the battery and a linear carbonate-based compound (e.g., ethyl methyl carbonate, dimethyl carbonate, or diethyl carbonate) having a low viscosity may be used. In this case, excellent electrolyte performance may be obtained by mixing cyclic carbonate and chained carbonate in a volume ratio of about 1:1 to about 1:9.

The lithium salt may be any compound capable of providing lithium ions used in the lithium secondary battery, without particular limitations. Examples of the lithium salt include LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, and LiB(C₂O₄)₂. The concentration of the lithium salt may be used within the range of about 0.1 to 2.0 M. When the concentration of lithium salt is within the above range, the electrolyte has appropriate conductivity and viscosity, which may exhibit good electrolyte performance, and the lithium ions may be effectively transported.

In addition to the above electrolyte components, the electrolyte may further contain one or more additives, for example, haloalkylene carbonate-based compounds such as difluoroethylene carbonate, pyridine, triethyl phosphite, triethanolamine,cyclic ether, ethylenediamine, N-glyme, hexane triamide, nitrobenzene derivatives, sulfur, quinone imine dyes, N-substituted oxazolidinones, N,N-substituted imidazolidines, ethylene glycol dialkyl ether, ammonium salts, pyrrole, 2-methoxyethanol, or aluminum trichloride, for the purpose of improving the life characteristics of the battery, inhibiting the reduction of the battery capacity, and improving the discharge capacity of the battery. In this case, the additive may be contained in an amount of about 0.1% by weight to 5% by weight based on the total weight of the electrolyte.

The lithium secondary battery according to the present disclosure is useful in the field of portable devices such as mobile phones, laptop computers, and digital cameras, and electric vehicles such as hybrid electric vehicles (HEV).

Hereinafter, embodiments of the present disclosure will be described in detail such that those skilled in the art can easily implement it. However, the present disclosure may be implemented in many different forms and is not limited to the embodiments described herein.

### Example 1:

A first solution was prepared by dissolving β-chitin (Glycosyn, β-chitin) in HFIP (1,1,1,3,3,3-hexafluoro-2-propanol) at a concentration of 0.6% by weight. In addition, a second solution was prepared by dissolving vinylidene fluoride-trifluoroethylene copolymer (Solvay, VDF/TrFE=75:25 mol%) in MEK (methylethylketone) at a concentration of 10% by weight.

The prepared first and second solutions, which were used as a core solution and a shell solution, respectively, were introduced into a coaxial electrospinning nozzle controlled at a temperature of 25 °C, and dried while performing electrospinning randomly by applying a voltage of 1.5 kV between the electrospinning nozzle and a support made of SUS foil, to prepare a non-woven fabric formed by a fiber with a core-shell structure having a core portion of β-chitin and a shell portion of a vinylidene fluoride-trifluoroethylene copolymer.

Subsequently, the non-woven fabric was heat treated at 200 °C for 30 minutes and then left at room temperature to obtain a non-woven separator. In the non-woven separator, the weight ratio of the core portion of β-chitin and the shell portion of vinylidene fluoride-trifluoroethylene copolymer was 70:30.

### Example 2:

A non-woven separator was prepared in the same manner as in Example 1, except that the average diameter of the fiber was changed under the conditions listed in Table 1.

### Comparative Example 1:

Instead of coaxial electrospinning, electrospinning was performed only with β-chitin under the conditions listed in Table 1.

### Comparative Example 2:

Instead of coaxial electrospinning, electrospinning was performed only with vinylidene fluoride-trifluoroethylene copolymer under the conditions listed in Table 1.

### Comparative Example 3:

A non-woven separator was prepared by immersing the non-woven fabric prepared according to Comparative Example 1 in a solution of a vinylidene fluoride-trifluoroethylene copolymer dissolved in methyl ethyl ketone (MEK) at a concentration of 10 wt%, followed by drying.

### Comparative Example 4:

A non-woven separator was prepared in the same manner as Example 1, except that the non-woven fabric prepared by coaxial electrospinning was not heat treated.

### Comparative Example 5:

A non-woven separator was prepared in the same manner as in Example 1, except that the non-woven fabric prepared by coaxial electrospinning was heat treated at 120 °C for 1 hour and then left at room temperature.

### <Average Diameter of Fiber>

In this specification, the average diameter of the fiber is defined as measured as follows.

The non-woven separator specimen was fixed to the mount for SEM measurement using carbon tape. Then, the surface was Pt-coated using an ion sputter for 60 seconds. The Pt-coated sample was measured under 10kV conditions using FE-SEM (Hitachi S-4800) equipment. Using software, the diameter of one fiber strand was measured at more than 10 points in the x500 image observed with FE-SEM, and the fiber diameter was calculated by averaging the measured values.

### <Basis Weight of Non-woven Fabric>

In this specification, the basis weight of the non-woven fabric is defined as measured as follows.

The basis weight of the non-woven fabric was measured as the weight per 1 m² of the manufactured non-woven fabric.

### <Permeability of Non-woven Separator>

In this specification, the permeability of the non-woven separator is defined as measured as follows.

The permeability of the separator was measured in accordance with JIS P8117.

### <Measurement of Heat Shrinkage Rate>

The prepared non-woven separator was left in an oven maintained at 150 °C for 30 minutes and then taken out, and the heat shrinkage rate was evaluated by measuring the length in the machine direction (MD) and the transverse direction (TD) before and after placing in the oven.

### <Measurement of ER and Cycle Performance>

Each non-woven separator according to the Examples and Comparative Examples was cut and placed to a Hoshen 2016 coin cell. Then, when the non-woven separator was impregnated with an electrolyte, the resistance value was measured by electrochemical impedance spectroscopy (EIS) using a 1 M LiPF₆-ethylene carbonate/ethyl methyl carbonate (weight ratio 3:7) electrolyte at 25 °C by the alternating current method.

In addition, charge and discharge were repeated at a rate of 1 C at 25 °C with a range of 2.5 V to 4.25 V, and the cycle performance (capacity retention rate) was measured by calculating the ratio of the initial discharge capacity to the discharge capacity after 200 cycles.

**Table 1**

| | Preparation | Heat treat ment | Average diameter of fiber (nm) | Thickness (µm) | Basis weight (g/m²) | Permeability (S/10 0 cc) | Heat shrinkage rate 150 °C MD/TD (%) | ER (Ω) | Cycle performance (%) |
|---|---|---|---|---|---|---|---|---|---|
| Ex. 1 | Coaxial electrospinnin (core portion: β-chitin, shell portion: PVDF-TrFE) | O (200° C /30 min) | 700 | 14.9 | 5.1 | 12 | 0/0 | 0.37 | 98 |
| Ex. 2 | Coaxial electrospinnin (core portion: β-chitin, shell portion: PVDF-TrFE) | O (200° C /30 min) | 500 | 14.7 | 5.3 | 15 | 0/0 | 0.32 | 99 |
| Comp. Ex. 1 | Electrospinning (β-chitin) | X | 700 | 15.2 | 5.4 | 17 | 0/0 | 0.64 | 80 |
| Comp. Ex. 2 | Electrospinning (PVDF-TrFE) | X | 720 | 15.3 | 5.7 | 27 | 28/27 | 0.53 | 89 |
| Comp. Ex. 3 | Electrospinni ng(β-chitin)/ Impregnation (PVDF-TrFE) | X | 700 | 15.7 | 11.4 | 175 | 0/0 | 0.71 | 72 |
| Comp. Ex. 4 | Coaxial electrospinning (core portion: β-chitin, shell portion: PVDF-TrFE) | X | 700 | 15.1 | 5.0 | 36 | 0/0 | 0.55 | 84 |
| Comp. Ex. 5 | Coaxial electrospinning (core portion: β-chitin, shell portion: PVDF-TrFE) | O (120° C /1h) | 700 | 14.9 | 5.1 | 12 | 0/0 | 0.41 | 95 |

As shown in Table 1, it can be seen that the non-woven separators of Examples 1 and 2 exhibit excellent heat shrinkage properties while exhibiting improved resistance and cycle characteristics when applied to lithium secondary batteries. For example, for Examples 1 and 2, the heat shrinkage rate was 0/0% at MD/TD, and the cycle performance was 98% and 99%, respectively, showing superior characteristics compared to the Comparative Examples.

Meanwhile, the non-woven separator of Comparative Example 1 formed from the β-chitin fibers had a resistance property of 0.64 Ω, which was higher than the non-woven separator of Examples 1 and 2, and a cycle performance of 80%, which was lower than the non-woven separator of Examples 1 and 2. The non-woven separator of Comparative Example 2 formed from the vinylidene fluoride-trifluoroethylene copolymer had a heat shrinkage ratio of 28/27%, which had poor heat resistance and poor high temperature heat shrinkage characteristics.

The non-woven separator of Comparative Example 3, in which the vinylidene fluoride-trifluoroethylene copolymer was applied to the β-chitin non-woven fabric by an impregnation method, had a poor resistance property with a resistance value of 0.71 Ω, and the non-woven separator of Comparative Example 4, in which no post-heat treatment process was performed, had a resistance property of 0.55 Ω, which was higher than the non-woven separators of Examples 1 and 2, and a cycle performance of 84%, which was lower than the non-woven separators of Examples 1 and 2.

The non-woven separator of Comparative Example 5, which was heat treated at a temperature below the melting point of the vinylidene fluoride-trifluoroethylene copolymer, had a resistivity property of 0.41 Ω, which was higher than the non-woven separators of Examples 1 and 2, and a cycle performance of 95%, which was lower than the non-woven separators of Examples 1 and 2.

Meanwhile, in Example 2, in which the average diameter of the fibers was about 500 nm, the electrical resistance was about 0.32 Ω, which was lower than the electrical resistance of about 0.37 Ω in Example 1, in which the average diameter of the fibers was about 700 nm.

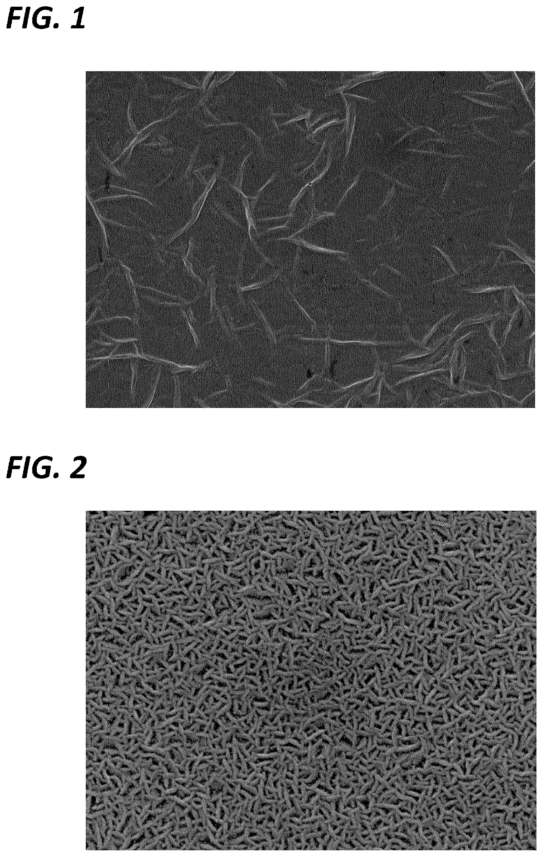

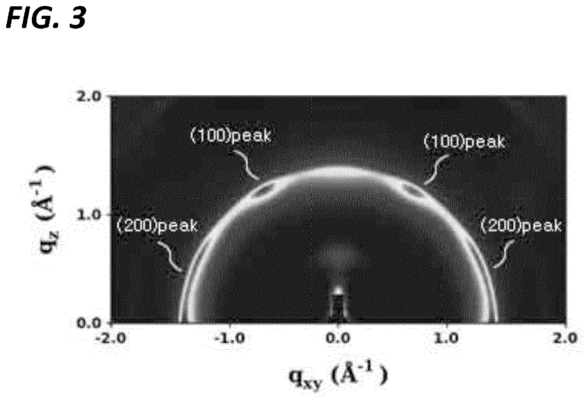

FIG. 1 is a surface SEM photograph of a non-woven separator according to Example 1 of the present disclosure, FIG. 2 is a surface SEM photograph of a non-woven separator according to Comparative Example 5 of the present disclosure, and FIG. 3 is a GIWAXS analysis of a non-woven separator according to Example 1 of the present disclosure.

Referring to FIGS. 1 and 2, it can be seen that the non-woven separator according to Example 1 of FIG. 1 exhibits a smoother surface compared to the non-woven separator according to Comparative Example 5 of FIG. 2. For example, it can be seen that the surface of the non-woven separator to which the present disclosure is applied is formed so as to be smoother than that of Example 1.

FIG. 3 is a graph depicting the results of a Grazing-Incidence Wide-Angle X-ray Scattering (GIWAXS) analysis of a non-woven separator according to Example 1 of the present disclosure. Referring to FIG. 3, it can be seen that due to heat treatment at a temperature higher than the melting point of the vinylidene fluoride-trifluoroethylene copolymer, the vinylidene fluoride-trifluoroethylene copolymer undergoes a melt-recrystallization process, resulting in a (200) peak at the equatorial position and a (100) peak at a point 30° away from the meridian position. That is, it can be seen that, when the (200) peak is in the equatorial position, the a-axis is aligned parallel to the surface of the substrate, and when the (100) peak is located 30° away from the position, the b-axis is perpendicular to the substrate, resulting in a crystalline phase with the b-axis aligned perpendicular to the substrate.

As a result, it can be confirmed that the b-axis of the PVDF-TrFE is aligned substantially perpendicular to the longitudinal direction of the fibers, which maximizes the ferroelectricity of the non-woven separator of the present disclosure.

From the foregoing, it will be appreciated that various embodiments of the present disclosure have been described herein for purposes of illustration.

## Claims

1. A method for manufacturing a non-woven separator for a lithium secondary battery, the method comprising:
(S1) preparing a first solution of β-chitin dissolved in a first solvent and a second solution of vinylidene fluoride-trifluoroethylene copolymer (PVDF-TrFE) dissolved in a second solvent;
(S2) coaxial electrospinning with the first solution as a core solution and the second solution as a shell solution to produce a non-woven fabric formed of a fiber with a core-shell structure having a core portion of the β-chitin and a shell portion of the vinylidene fluoride-trifluoroethylene copolymer; and
(S3) performing heat treatment on the non-woven fabric at a temperature lower than a thermal decomposition point of the β-chitin and higher than a melting point of the vinylidene fluoride-trifluoroethylene copolymer to melt and recrystallize the vinylidene fluoride-trifluoroethylene copolymer.

2. The method according to claim 1, wherein a weight ratio of the core portion of the β-chitin and the shell portion of the vinylidene fluoride-trifluoroethylene copolymer is approximately 50:50 to 99:1.

3. The method according to claim 1, wherein the temperature of the heat treatment of the non-woven fabric is approximately 150 °C to 250 °C.

4. A non-woven separator for a lithium secondary battery, comprising:
a fiber with a core-shell structure having a core portion of the β-chitin and a shell portion of the vinylidene fluoride-trifluoroethylene copolymer,
wherein the vinylidene fluoride-trifluoroethylene copolymer has a crystal grown along a crystal axis, and the crystal grown along the crystal axis is aligned in a direction not parallel to a longitudinal direction of the fiber.

5. The non-woven separator according to claim 4, wherein the crystal grown along the crystal axis is aligned in a direction substantially perpendicular to the longitudinal direction of the fiber.

6. The non-woven separator according to claim 4, wherein a weight ratio of the core portion and the shell portion is approximately 50:50 to 99:1.

7. The non-woven separator according to claim 4, wherein the non-woven separator has a thickness of approximately 2 µm to 30 µm.

8. The non-woven separator according to claim 4, wherein the non-woven separator has a basis weight of approximately 2 g/m² to 10 g/m².

9. The non-woven separator according to claim 4, further comprising a mixture of inorganic particles and a polymer coated on at least one surface of the non-woven separator.

10. A composite separator for a lithium secondary battery, comprising:
the non-woven separator according to any one of claims 4-9; and
a porous polymer film laminated on at least one surface of the non-woven separator.

11. An electrode assembly for a lithium secondary battery, comprising:
a positive electrode;
a negative electrode; and
a separator disposed between the positive electrode and the negative electrode,
wherein the separator is the non-woven separator according to any one of claims 4-9.

12. An electrode assembly for a lithium secondary battery, comprising:
a positive electrode;
a negative electrode; and
a separator disposed between the positive electrode and the negative electrode,
wherein the separator is the composite separator of claim 10.

13. A lithium secondary battery comprising the electrode assembly of claim 11.

14. A lithium secondary battery comprising the electrode assembly of claim 12.

## Patentansprüche

1. Verfahren zur Herstellung eines Vliesseparators für eine Lithiumsekundärbatterie, wobei das Verfahren umfasst:
(S1) Herstellen einer ersten Lösung aus in einem ersten Lösungsmittel gelöstem β-Chitin und einer zweiten Lösung von in einem zweiten Lösungsmittel gelöstem Vinylidenfluorid-Trifluorethylen-Copolymer (PVDF-TrFE);
(S2) koaxiales Elektrospinnen mit der ersten Lösung als Kernlösung und der zweiten Lösung als Schalenlösung, um einen Vliesstoff zu erzeugen, der aus einer Faser mit einer Kern-Schalen-Struktur gebildet ist, die einen Kernabschnitt aus dem β-Chitin und einen Schalenabschnitt aus dem Vinylidenfluorid-Trifluorethylen-Copolymer aufweist; und
(S3) Durchführen einer Wärmebehandlung an dem Vliesstoff bei einer Temperatur, die niedriger als ein thermischer Zersetzungspunkt des β-Chitins und höher als ein Schmelzpunkt des Vinylidenfluorid-Trifluorethylen-Copolymers ist, um das Vinylidenfluorid-Trifluorethylen-Copolymer zu schmelzen und zu rekristallisieren.

2. Verfahren nach Anspruch 1, wobei ein Gewichtsverhältnis des Kernabschnitts aus dem β-Chitin zum Schalenabschnitt aus dem Vinylidenfluorid-Trifluorethylen-Copolymer annähernd 50:50 bis 99:1 ist.

3. Verfahren nach Anspruch 1, wobei die Temperatur der Wärmebehandlung des Vliesstoffs annähernd 150 °C bis 250 °C beträgt.

4. Vliesseparator für eine Lithiumsekundärbatterie, umfassend:
eine Faser mit einer Kern-Schalen-Struktur, die einen Kernabschnitt aus dem β-Chitin und einen Schalenabschnitt aus dem Vinylidenfluorid-Trifluorethylen-Copolymer aufweist,
wobei das Vinylidenfluorid-Trifluorethylen-Copolymer einen entlang einer Kristallachse gewachsenen Kristall aufweist und der entlang der Kristallachse gewachsene Kristall in einer Richtung ausgerichtet ist, die nicht parallel zu einer Längsrichtung der Faser liegt.

5. Vliesseparator nach Anspruch 4, wobei der entlang der Kristallachse gewachsene Kristall in einer Richtung ausgerichtet ist, die im Wesentlichen senkrecht zur Längsrichtung der Faser liegt.

6. Vliesseparator nach Anspruch 4, wobei ein Gewichtsverhältnis des Kernabschnitts zum Schalenabschnitt annähernd 50:50 bis 99:1 ist.

7. Vliesseparator nach Anspruch 4, wobei der Vliesseparator eine Dicke von annähernd 2 µm bis 30 µm aufweist.

8. Vliesseparator nach Anspruch 4, wobei der Vliesseparator ein Flächengewicht von annähernd 2 g/m² bis 10 g/m² aufweist.

9. Vliesseparator nach Anspruch 4, weiter umfassend ein auf mindestens einer Oberfläche des Vliesseparators als Beschichtung aufgebrachtes Gemisch aus anorganischen Partikeln und einem Polymer.

10. Verbundseparator für eine Lithiumsekundärbatterie, umfassend:
den Vliesseparator nach einem der Ansprüche 4-9; und
einen porösen Polymerfilm, der auf mindestens eine Oberfläche des Vliesseparators laminiert ist.

11. Elektrodenanordnung für eine Lithiumsekundärbatterie, umfassend:
eine positive Elektrode;
eine negative Elektrode; und
einen Separator, der zwischen der positiven Elektrode und der negativen Elektrode angeordnet ist,
wobei der Separator der Vliesseparator nach einem der Ansprüche 4-9 ist.

12. Elektrodenanordnung für eine Lithiumsekundärbatterie, umfassend:
eine positive Elektrode;
eine negative Elektrode; und
einen Separator, der zwischen der positiven Elektrode und der negativen Elektrode angeordnet ist,
wobei der Separator der Verbundseparator nach Anspruch 10 ist.

13. Lithiumsekundärbatterie, umfassend die Elektrodenanordnung nach Anspruch 11.

14. Lithiumsekundärbatterie, umfassend die Elektrodenanordnung nach Anspruch 12.

## Revendications

1. Procédé de fabrication d'un séparateur non-tissé pour batterie secondaire au lithium, le procédé comprenant :
(S1) la préparation d'une première solution de β-chitine dissoute dans un premier solvant et d'une deuxième solution de copolymère de fluorure de vinylidène-trifluoroéthylène (PVDF-TrFE) dissoute dans un deuxième solvant ;
(S2) l'électrofilage coaxial avec la première solution en tant que solution noyau et la deuxième solution en tant que solution d'enveloppe pour produire un tissu non-tissé formé d'une fibre présentant une structure noyau-enveloppe ayant une partie noyau en β-chitine et une partie enveloppe en copolymère de fluorure de vinylidène-trifluoroéthylène ; et
(S3) l'exécution d'un traitement thermique sur le tissu non-tissé à une température inférieure à un point de décomposition thermique de la β-chitine et supérieure à un point de fusion du copolymère de fluorure de vinylidène-trifluoroéthylène afin de fondre et de recristalliser le copolymère de fluorure de vinylidène-trifluoroéthylène.

2. Procédé selon la revendication 1, dans lequel un rapport massique de la partie noyau en β-chitine et de la partie enveloppe en copolymère de fluorure de vinylidène-trifluoroéthylène va d'environ 50:50 à 99:1.

3. Procédé selon la revendication 1, dans lequel la température du traitement thermique du tissu non-tissé va d'environ 150 °C à 250 °C.

4. Séparateur non-tissé pour batterie secondaire au lithium, comprenant :
une fibre présentant une structure noyau-enveloppe ayant une partie noyau en β-chitine et une partie enveloppe en copolymère de fluorure de vinylidène-trifluoroéthylène,
dans lequel le copolymère de fluorure de vinylidène-trifluoroéthylène présente un cristal développé le long d'un axe cristallin, et le cristal développé le long de l'axe cristallin est aligné dans une direction non parallèle à une direction longitudinale de la fibre.

5. Séparateur non-tissé selon la revendication 4, dans lequel le cristal développé le long de l'axe cristallin est aligné dans une direction sensiblement perpendiculaire à la direction longitudinale de la fibre.

6. Séparateur non-tissé selon la revendication 4, dans lequel un rapport massique de la partie noyau et de la partie enveloppe va d'environ 50:50 à 99:1.

7. Séparateur non-tissé selon la revendication 4, dans lequel le séparateur non-tissé présente une épaisseur allant d'environ 2 µm à 30 µm.

8. Séparateur non-tissé selon la revendication 4, dans lequel le séparateur non-tissé a un grammage allant d'environ 2 g/m² à 10 g/m².

9. Séparateur non-tissé selon la revendication 4, comprenant en outre un mélange de particules inorganiques et d'un polymère revêtu sur au moins une surface du séparateur non-tissé.

10. Séparateur composite pour batterie secondaire au lithium, comprenant :
le séparateur non-tissé selon l'une quelconque des revendications 4 à 9 ; et
un film polymère poreux stratifié sur au moins une surface du séparateur non-tissé.

11. Ensemble à électrodes pour une batterie secondaire au lithium, comprenant :
une électrode positive ;
une électrode négative ; et
un séparateur disposé entre l'électrode positive et l'électrode négative,
dans lequel le séparateur est le séparateur non-tissé selon l'une quelconque des revendications 4 à 9.

12. Ensemble à électrodes pour une batterie secondaire au lithium, comprenant :
une électrode positive ;
une électrode négative ; et
un séparateur disposé entre l'électrode positive et l'électrode négative,
dans lequel le séparateur est le séparateur composite selon la revendication 10.

13. Batterie secondaire au lithium comprenant l'ensemble à électrodes selon la revendication 11.

14. Batterie secondaire au lithium comprenant l'ensemble à électrodes selon la revendication 12.
